# FASCICULE DE BREVET EUROPEEN

(11) **EP 3 365 293 B1**
(45) Date de publication et mention de la délivrance du brevet: **18.03.2020**
(21) Numéro de dépôt: 16787797.6
(22) Date de dépôt: 24.10.2016
(51) Int. Cl.: C03C 17/00, C03C 17/32, C03C 17/42

(54) **PROCÉDÉ DE DÉCORATION D'UN ARTICLE EN VERRE CREUX**
VERFAHREN ZUM DEKORIEREN EINES HOHLEN GLASGEGENSTANDS
METHOD FOR DECORATING A HOLLOW GLASS ITEM

(30) Priorité: 23.10.2015 FR 1560138
(43) Date de publication de la demande: 29.08.2018
(73) Titulaire: Pochet du Courval, 92110 Clichy (FR)
(72) Inventeur: GUILBAUT, Romuald, 80135 Yaucourt Bussus (FR)
(74) Mandataire: Lavoix
(86) Numéro de dépôt international: PCT/EP2016/075582
(87) Numéro de publication internationale: WO 2017/068194

(56) Documents cités:
- DE-A1- 2 517 504
- US-A- 3 895 126

## Description

La présente invention concerne un procédé de décoration d'un article en verre creux, par exemple un flacon ou une bouteille, notamment destinés à la parfumerie.

L'invention concerne également une installation de décoration correspondante.

Il existe de nombreuses techniques de parachèvement du verre, telles que la sérigraphie, le laquage, le sablage, le dépolissage à l'acide par exemple. Ces opérations sont réalisées sur l'article en verre déjà soufflé ou formé.

Il est en outre connu de réaliser un poudrage direct d'une surface de l'article en verre en appliquant directement une poudre colorante, puis éventuellement en cuisant le dépôt ainsi formé.

De telles techniques de parachèvement donnent en général satisfaction, mais l'homme du métier reste à la recherche de nouvelles techniques permettant d'obtenir plus rapidement ou plus facilement un même résultat, ou bien permettant d'obtenir un nouveau traitement permettant un nouvel effet décoratif.

Par ailleurs, il est connu de réaliser un poudrage électrostatique sur certains matériaux très conducteurs de l'électricité, comme les métaux.

Un but de l'invention est donc de fournir un procédé de décoration d'un article en verre creux permettant soit de réaliser plus rapidement un décor existant, soit de réaliser un nouveau décor.

A cet effet, l'invention concerne un procédé de décoration selon la revendication 1.

Selon des modes particuliers de réalisation, le procédé comprend l'une ou plusieurs des caractéristiques correspondant aux revendications 2 à 8, prises selon toutes les combinaisons techniquement possibles.

L'invention concerne également une installation de décoration selon la revendication 9.

L'invention sera mieux comprise à la lecture de la description qui va suivre, donnée uniquement à titre d'exemple et faite en se référant aux dessins annexés, sur lesquels :
- la figure 1 est une représentation schématique d'une partie d'une installation selon l'invention,
- la figure 2 est une représentation schématique d'une autre partie de l'installation représentée partiellement sur la figure 1,
- les figures 3 à 5 sont des vues schématiques de variantes du système de mise à la masse représenté sur la figure 1.

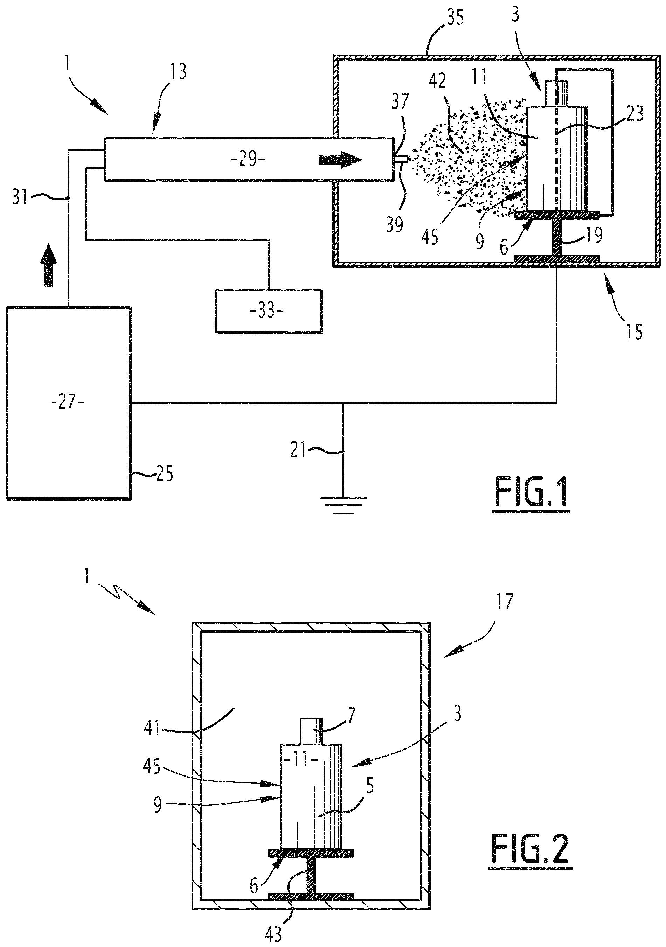

En référence aux figures 1 et 2, on décrit une installation 1 selon l'invention. L'installation 1 est adaptée pour réaliser un poudrage d'un article 3 en verre creux, tel que, par exemple, une bouteille ou un flacon destiné à la parfumerie.

L'article 3 comprend un corps 5, un fond 6, et une bague 7.

Le corps 5 définit une surface 9 à décorer, avantageusement externe. Le corps 5 définit un volume intérieur 11.

Le volume intérieur 11 est ouvert vers l'extérieur via la bague 7. Le volume intérieur 11 est par exemple destiné à recevoir du parfum.

L'installation 1 comprend un système de pulvérisation 13 (figure 1), un système de mise à la masse 15 adapté pour être en contact électrique avec l'article 3, et un système de cuisson 17 (figure 2).

Comme visible sur la figure 1, le système de mise à la masse 15 comprend par exemple un support 19 prévu pour supporter l'article 3 et relié électriquement à une masse 21. Optionnellement, le système de mise à la masse 15 comporte aussi un organe 23 électriquement conducteur et relié électriquement à la masse 21.

Par masse, on entend classiquement un élément conducteur à potentiel électrique nul.

L'organe 23 est adapté pour être introduit dans le volume intérieur 11 de l'article 3, et mis en contact électrique avec l'article.

Le support 19 est par exemple adapté pour recevoir le fond 6 de l'article 3, l'article reposant debout sur le support.

Le système de pulvérisation 13 comprend un réservoir 25 adapté pour contenir une poudre colorante 27, un pistolet 29 de pulvérisation de la poudre colorante relié par une canalisation 31 au réservoir, et une source de haute tension 33 reliée électriquement au pistolet 29. Optionnellement, le système de pulvérisation 13 comprend aussi une enceinte 35 adaptée pour éviter une dispersion de la poudre colorante 27 pulvérisée. L'enceinte 35 est avantageusement hermétique, au moins pendant la pulvérisation de la poudre.

La poudre colorante 27 comprend par exemple, à au moins 50% en masse, une résine époxy, un polyester, un polyuréthane, une résine acrylique ou un mélange de deux ou plus de ces composés. La poudre colorante 27 comprend en outre avantageusement des pigments.

La poudre colorante 27 comporte par exemple un primaire d'accrochage.

En variante, le primaire d'accrochage est avantageusement déposé à l'avance sur l'article 3 pour permettre une meilleure accroche de la poudre sur la surface 9.

Le primaire d'accrochage déposé comprend par exemple un vernis hydro, uv, ou époxy.

Le primaire d'accrochage est facultatif, en particulier si la poudre est suffisamment adhérente une fois déposée.

La canalisation 31 est adaptée pour permettre l'acheminement de la poudre colorante 27 depuis le réservoir 25 jusqu'au pistolet 29.

Le pistolet 29 comprend une sortie 37 débouchant avantageusement à l'intérieur de l'enceinte 35 pour l'éjection de la poudre, et une électrode 39 adaptée pour électriser, par exemple positivement, la poudre colorante 27.

L'électrode 39 est reliée électriquement à la source de haute tension 33 pour réaliser une électrisation de la poudre colorante 27, avantageusement par effet « corona ».

Comme représenté sur la figure 2, le système de cuisson 17 est par exemple constitué d'un four 41 adapté pour porter la surface 9 de l'article 3 à une température de cuisson.

Le four 41 comprend par exemple un support 43 prévu pour recevoir l'article 3.

Selon un mode particulier de réalisation (non représenté), l'enceinte 35 est également un four et il n'y a pas de four 41 séparé de l'enceinte 35. Ceci permet d'éviter de déplacer l'article 3 entre la pulvérisation de la poudre colorante et la cuisson.

Selon un mode particulier de réalisation, le système de cuisson 17 comprend en outre un tunnel infrarouge (non représenté) dans lequel passe l'article 3 pour réduire la durée de la cuisson de la surface 9.

Le fonctionnement de l'installation 1 va maintenant être décrit.

L'article 3 est tout d'abord fourni à l'issue d'une étape de fabrication connue en elle-même. Par exemple, l'article 3 est soufflé dans un moule finisseur (non représenté).

L'article 3 est mis en contact avec la masse 21 en le déposant sur le support 19 dans l'enceinte 35. Optionnellement, l'organe 23 est introduit dans le volume intérieur 11.

Puis une pulvérisation de la poudre colorante 27 est réalisée pour obtenir un dépôt 45 de la poudre colorante sur la surface 9 de l'article 3.

La poudre colorante 27 contenue dans le réservoir 25 s'écoule par la canalisation 31 dans le pistolet 29. Le pistolet 29 éjecte la poudre colorante 27 par la sortie 37 afin d'obtenir un nuage de poudre 42 à proximité de l'article 3.

L'électrode 39, portée à un potentiel très élevé, électrise par exemple positivement les grains de poudre éjectés. La poudre colorante 27 éjectée est attirée sur la surface 9 par des forces électrostatiques. Le dépôt 45 se constitue rapidement, avantageusement en moins de quelques secondes.

Ensuite, l'article 3 est placé dans le four 41 comme représenté sur la figure 2. La surface 9 et le dépôt 45 sont alors cuits à la température de cuisson, avantageusement comprise entre 160°C et 210°C.

La durée de la cuisson est par exemple comprise entre 6 et 20 minutes.

Avantageusement, lorsque le dépôt 45 est réalisé comme représenté sur la figure 1, la surface 9 se trouve à une température supérieure ou égale à 100°C. Il a en effet été constaté que ceci améliore dans certains cas la qualité du décor réalisé.

Selon un mode particulier de réalisation, la surface 9 a été préalablement laquée, par des moyens connus en eux-mêmes, avant l'étape de pulvérisation de la poudre colorante 27.

Grâce aux caractéristiques décrites ci-dessus, il est possible d'obtenir rapidement et facilement un dépôt 45 présentant d'intéressantes qualités esthétiques.

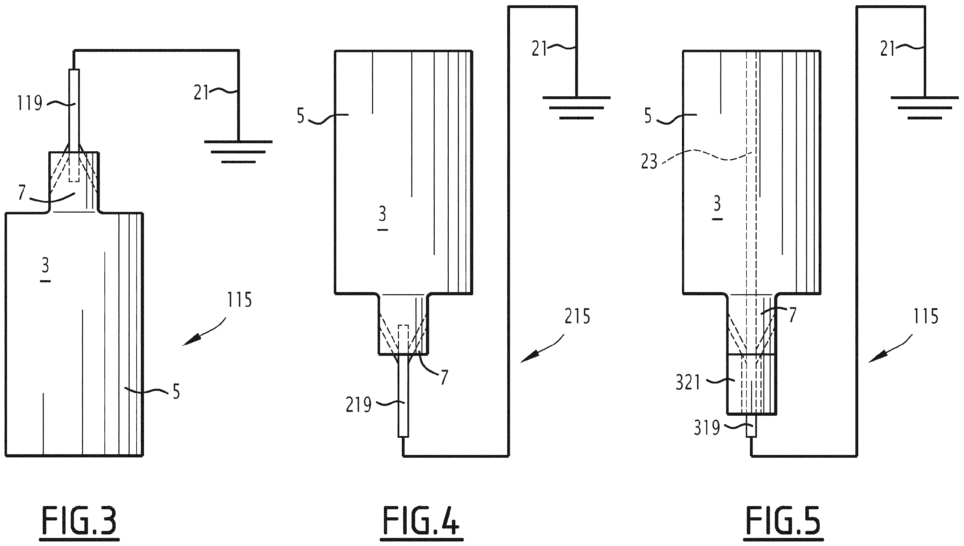

Dans certains cas, selon la manière dont la pulvérisation est effectuée et selon la configuration du système de mise à la masse 15, le dépôt 45 présente un aspect difficile, voire impossible, à obtenir par des procédés de l'art antérieur.En référence aux figures 3 à 5, on décrit trois systèmes de mise à la masse 115, 215, 315 constituant des variantes du système de mise à la masse 15. Ces variantes sont analogues au système de mise à la masse 15. Les caractéristiques similaires ne seront pas décrites à nouveau. Seules les différences seront décrites ci-après.

Le système de mise à la masse 115 représenté sur la figure 3 comporte un support 119 en contact électrique avec la bague 7 de l'article 3, l'article étant emmanché sur le support.

Le support 119 a par exemple une forme de tige comportant un embout inférieur adapté pour s'agripper sur la bague 7 de l'article 3, par exemple à l'intérieur de la bague.

Le système de mise à la masse 215 représenté sur la figure 4 comporte un support 219 en contact électrique avec la bague 7 de l'article 3, l'article étant emmanché sur le support 219.

Le support 219 est par exemple structurellement analogue au support 119, si ce n'est qu'il comporte un embout supérieur adapté pour s'agripper sur la bague 7 de l'article 3, la bague étant dirigée vers le bas.

Le système de mise à la masse 315 représenté sur la figure 5 comporte un support 319 structurellement analogue au support 219 et disposé comme le support 219 par rapport à l'article 3. Le système de mise à la masse 315 comporte en outre un isolant électrique 321 situé autour du support 319 en dessous, et avantageusement au contact, de de la bague 7.

L'organe 23 optionnel est par exemple situé dans le prolongement des supports 119, 219, 319, comme représenté sur la figure 5.

## Revendications

1. Procédé de décoration d'un article (3) en verre creux, comprenant les étapes suivantes :
- fourniture de l'article (3) et mise de l'article (3) en contact avec une masse (21) électrique,
- pulvérisation d'une poudre colorante (27) chargée électriquement pour réaliser un dépôt (45) de la poudre colorante (27) sur une surface (9) de l'article (3) fourni, la poudre colorante (27) étant attirée sur la surface (9) par des forces électrostatiques, et
- cuisson d'au moins la surface (9) de l'article (3) comportant ledit dépôt (45) à une température de cuisson,
**caractérisé en ce que** la poudre colorante (27) comprend, à au moins 50% en masse, une résine époxy, un polyester, un polyuréthane, une résine acrylique ou leurs mélanges.

2. Procédé selon la revendication 1, dans lequel ladite surface (9) est définie par une paroi externe de l'article (3).

3. Procédé selon la revendication 1 ou 2, dans lequel l'étape de pulvérisation comprend la mise en œuvre d'au moins un pistolet (29) de pulvérisation de la poudre colorante (27) comportant au moins une électrode (39) adaptée pour électriser positivement la poudre colorante (27).

4. Procédé selon l'une quelconque des revendications 1 à 3, dans lequel la température de cuisson est comprise entre 160°C et 210°C.

5. Procédé selon l'une quelconque des revendications 1 à 4, dans lequel la surface (9) est à une température supérieure ou égale à 100°C au moment où le dépôt (45) est réalisé.

6. Procédé selon l'une quelconque des revendications 1 à 5, dans lequel la surface (9) recevant le dépôt (45) a été préalablement laquée.

7. Procédé selon l'une quelconque des revendications 1 à 6, dans lequel la mise en contact avec la masse (21) est réalisée au moins en partie en déposant l'article (3) sur un support (19) électriquement conducteur relié à ladite masse (21).

8. Procédé selon l'une quelconque des revendications 1 à 7, dans lequel l'article (3) comporte un corps (5) définissant un volume intérieur (11) ouvert, la mise en contact avec ladite masse (21) comprenant l'introduction d'un organe (23) électriquement conducteur dans le volume intérieur (11), l'organe (23) étant relié à ladite masse (21).

9. Installation de décoration d'un article (3) en verre creux, comprenant :
- un système de mise à la masse (15) adapté pour être mis en contact avec l'article (3),
- un système de pulvérisation (13) d'une poudre colorante (27) adapté pour charger électriquement la poudre colorante (27) et pour réaliser un dépôt (45) de la poudre colorante (27) sur une surface (9) de l'article (3), la poudre colorante (27) étant destinée à être attirée sur la surface (9) par des forces électrostatiques, et
- un système de cuisson (17), à une température de cuisson, d'au moins la surface (9) de l'article (3) comportant ledit dépôt (45),
**caractérisée en ce que** la poudre colorante (27) comprend, à au moins 50% en masse, une résine époxy, un polyester, un polyuréthane, une résine acrylique ou leurs mélanges.

## Patentansprüche

1. Verfahren zur Dekoration eines Artikels (3) eines hohlen Glases, aufweisend die folgenden Schritte:
- Bereitstellen des Artikels (3) und in-Kontakt-Bringen des Artikels (3) mit einer elektrischen Masse (21),
- Zerstäuben eines elektrisch geladenen, farbgebenden Pulvers (27) zum Realisieren einer Ablagerung (45) von dem farbgebenden Pulver (27) auf einer Fläche (9) des bereitgestellten Artikels (3), wobei das farbgebende Pulver (27) auf der Fläche (9) von elektrostatischen Kräften angezogen wird, und
- Einbrennen wenigstens der Fläche (9) des Artikels (3), die die Ablagerung (45) aufweist bei einer Einbrenntemperatur,
**dadurch gekennzeichnet, dass** das farbgebende Pulver (27) aufweist, mit wenigstens 50 Massen-%, ein Epoxidharz, ein Polyester, ein Polyurethan, ein Akrylharz oder deren Mischungen.

2. Verfahren gemäß Anspruch 1, wobei die besagte Fläche (9) von einer Außenwand des Artikels (3) definiert ist.

3. Verfahren gemäß Anspruch 1 oder 2, wobei der Schritt des Zerstäubens aufweist das Betätigen wenigstens Pistole (29) zur Zerstäubung des farbgebenden Pulvers (27), die aufweist wenigstens eine Elektrode (39), die angepasst ist zum positiven Elektrisieren des farbgebenden Pulvers (27).

4. Verfahren gemäß irgendeinem der Ansprüche 1 bis 3, wobei die Einbrenn-Temperatur zwischen 160°C und 210°C liegt.

5. Verfahren gemäß irgendeinem der Ansprüche 1 bis 4, wobei die Fläche (9) eine Temperatur von größer oder gleich 100°C hat im Moment, in welchem die Ablagerung (45) realisiert wird.

6. Verfahren gemäß irgendeinem der Ansprüche 1 bis 5, wobei die Fläche (9), die die Ablagerung (45) aufnimmt, vorlackiert worden ist.

7. Verfahren gemäß irgendeinem der Ansprüche 1 bis 6, wobei das in-Kontakt-Bringen mit der Masse (21) realisiert wird wenigstens teilweise indem der Artikel (3) auf einem elektrisch leitenden Halter (9) aufgelegt wird, der mit der Masse (21) verbunden ist.

8. Verfahren gemäß irgendeinem der Ansprüche 1 bis 7, wobei der Artikel (3) aufweist einen Körper (5), der ein offenes Innenvolumen (11) definiert, wobei das in-Kontakt-Bringen mit der Masse (21) aufweist das Einbringen eines elektrisch leitenden Organs (23) in das Innenvolumen (11), wobei das Organ (23) mit der Masse (21) verbunden ist.

9. Einrichtung zur Dekoration eines Artikels (3) aus einem hohlen Glas, aufweisend:
- ein System zur Erstellung der Masse (15), das angepasst ist, um mit dem Artikel (3) in Kontakt gebracht zu werden,
- ein System zur Zerstäubung (13) eines farbgebenden Pulvers (27), das angepasst ist zum elektrischen Laden des farbgebenden Pulvers (27) und zum Realisieren einer Ablagerung (45) des farbgebenden Pulvers (27) auf einer Fläche (9) des Artikels (3), wobei das farbgebende Pulver (27) dazu bestimmt ist, auf der Fläche (9) angezogen zu werden von elektrostatischen Kräften, und
- ein System zum Einbrennen (17), mit einer Einbrenn-Temperatur, wenigstens der Fläche (9) des Artikels (3), die die Ablagerung (45) aufweist,
**dadurch gekennzeichnet, dass** das farbgebende Pulver (27) aufweist, mit wenigstens 50 Massen-%, ein Epoxidharz, ein Polyester, ein Polyurethan, ein Akrylharz oder deren Mischungen.

## Claims

1. A method for decorating a hollow glass item (3), comprising the following steps:
- providing the item (3) and placing the item (3) in contact with an electrical ground (21),
- spraying electrically charged dyeing powder (27) to produce a deposition (45) of the dyeing powder (27) on a surface (9) of the provided item (3), the dyeing powder (27) being attracted on the surface (9) by electrostatic forces, and
- firing at least the surface (9) of the item (3) including said deposition (45) at a firing temperature,
**characterized in that** the dyeing powder (27) comprises at least 50% by weight of an epoxy resin, a polyester, a polyurethane, an acrylic resin or mixtures thereof.

2. The method according to claim 1, wherein said surface (9) is defined by an outer wall of the item (3).

3. The method according to claim 1 or 2, wherein the spraying step comprises implementing at least one spray gun (29) for spraying the dyeing powder (27) the spray gun including at least one electrode (39) suitable for positively electrifying the dyeing powder (27).

4. The method according to any one of claims 1 to 3, wherein the firing temperature is comprised between 160°C and 210°C.

5. The method according to any one of claims 1 to 4, wherein the surface (9) is at a temperature greater than or equal to 100°C when the deposition (45) is carried out.

6. The method according to any one of claims 1 to 5, wherein the surface (9) receiving the deposition (45) has previously been varnished.

7. The method according to any one of claims 1 to 6, wherein placing the item in contact with the ground (21) is done at least partially by depositing the item (3) on an electrically conducting support (19) connected to said ground (21).

8. The method according to any one of claims 1 to 7, wherein the item (3) includes a body (5) defining an open inner volume (11), placing the item in contact with said ground (21) comprising introducing an electrically conductive member (23) into the inner volume (11), the member (23) being connected to said ground (21).

9. An installation for decorating a hollow glass item (3), comprising:
- a grounding system (15) suitable for being placed in contact with the item (3),
- a system (13) for spraying a dyeing powder (27) to electrically charge the dyeing powder (27) and to deposit (45) the dyeing powder (27) on a surface (9) of the item (3), the dyeing powder (27) being intended to be attracted on the surface (9) by electrostatic forces, and
- a system for firing (17), at a firing temperature, at least the surface (9) of the item (3) including said deposition (45),
**characterized in that** the dyeing powder (27) comprises at least 50% by weight of an epoxy resin, a polyester, a polyurethane, an acrylic resin or mixtures thereof.
